# EUROPÄISCHE PATENTSCHRIFT

(11) **EP 2 758 295 B1**
(45) Veröffentlichungstag und Bekanntmachung des Hinweises auf die Patenterteilung: **22.03.2017**
(21) Anmeldenummer: 12753965.8
(22) Anmeldetag: 30.08.2012
(51) Int. Cl.: B62D 15/02

(54) **VERFAHREN ZUM AUTONOMEN RANGIEREN EINES FAHRZEUGS SOWIE FAHRERASSISTENZEINRICHTUNG**
METHOD FOR AUTONOMOUS MANOEUVRING OF A VEHICLE AS WELL AS A DRIVER ASSISTANCE DEVICE
PROCÉDÉ DE STATIONNEMENT AUTONOME D'UN VÉHICULE, AINSI QUE DISPOSITIF D'AIDE À LA CONDUITE

(30) Priorität: 24.09.2011 DE 102011114317
(43) Veröffentlichungstag der Anmeldung: 30.07.2014
(73) Patentinhaber: Valeo Schalter und Sensoren GmbH, 74321 Bietigheim-Bissingen (DE)
(72) Erfinder: BARTH, Harald, 70825 Korntal-Muenchingen (DE); JECKER, Nicolas, 73730 Esslingen (DE)
(86) Internationale Anmeldenummer: PCT/EP2012/066802
(87) Internationale Veröffentlichungsnummer: WO 2013/041337

(56) Entgegenhaltungen:
- EP-A2- 2 316 709
- JP-A- 2007 295 033
- JP-A- 2008 174 192

## Beschreibung

Die Erfindung betrifft ein Verfahren zum autonomen Rangieren eines Fahrzeugs, bei welchem sich ein Fahrer des Fahrzeugs während des Rangiervorgangs außerhalb des Fahrzeugs positioniert, und der Fahrer mittels einer Detektoreinrichtung des Fahrzeugs während des Rangiervorgangs erfasst wird. Des Weiteren betrifft die Erfindung auch eine Fahrerassistenzeinrichtung, insbesondere eine Parkassistenzeinrichtung, welche zum Durchführen eines erfindungsgemäßen Verfahrens ausgebildet ist.

Aus der EP 1 249 379 A2 ist ein Verfahren und eine Vorrichtung zum Verbringen eines Kraftfahrzeugs in eine Zielposition bekannt. Der Fahrzeugführer startet nach dem Aussteigen den Park- oder Rangiervorgang mittels einer Sendeeinrichtung. Die Fernbedienung ist so ausgebildet, dass der selbsttätige Park- oder Rangiervorgang nur dann aufrecht erhalten bleibt, solange der Fahrzeugführer Kontakt mit dem Fahrzeug hält, beispielsweise durch Drücken einer Park- oder Rangiertaste in der Sendeeinrichtung.

Des Weiteren ist aus der DE 10 2009 051 463 A1 ein Kraftfahrzeug und ein Verfahren zum Durchführen eines Ausparkvorgangs eines Kraftfahrzeugs bekannt. Auch hier kann ein Parkvorgang dadurch erfolgen, dass der Fahrer während des Parkvorgangs außerhalb des Fahrzeugs sich befindet und die Positionierung durch eine Kamera erfasst wird. Der Fahrer hat die Möglichkeit, den Ausparkvorgang durch ein Handzeichen zu unterbrechen, welches von der Kamera erfasst werden muss.

Gerade bei Rangiervorgängen eines Fahrzeugs, bei dem sich der Fahrzeugführer außerhalb des Fahrzeugs befindet, sind höchste Anforderungen an die Sicherheit zu stellen. Bei den bekannten Ausführungen ist dies eingeschränkt. Gerade bei der DE 10 2009 051 463 A1 ist bei der Kameradetektion ein Stoppen des Parkvorgangs nur dann möglich, wenn ein dafür vorgesehenes explizites Handzeichen von der Kamera erfasst wird.

JP 2007 295033 A ist als nächstliegender Stand der Technik nach dem Oberbegriff des Anspruchs 1 zu sehen und offenbart eine Fernbedienungssteuereinheit zum Steuern eines auf dem Fahrzeug befindlichen Geräts auf Basis der Fernbedienungsanweisung von einem Bedienungsdatenendgerät. Es gibt Mittel zum Detektieren einer Position des Bedienungsdatenendgeräts. Die Fernbedienungssteuereinheit kann den Bediener, der das Bedienungsdatenendgerät trägt, mit einer an dem Fahrzeug angebrachten Kamera fotografieren, und einen Bediener identifizieren. Wenn sich ein Bediener aus einem Bedienungsempfangsbereich entfernt, kann die Fernbedienungssteuereinheit die Verarbeitung unterbrechen.

Es ist Aufgabe der vorliegenden Erfindung, ein Verfahren sowie eine Fahrerassistenzeinrichtung zu schaffen, bei welcher ein autonomes Rangieren eines Fahrzeugs, bei dem der Fahrer während des Rangiervorgangs außerhalb des Fahrzeugs sich befindet, im Hinblick auf die Sicherheit zu verbessern.

Diese Aufgabe wird durch ein Verfahren sowie eine Fahrerassistenzeinrichtung gemäß den unabhängigen Ansprüchen gelöst.

Bei einem erfindungsgemäßen Verfahren zum autonomen Rangieren eines Fahrzeugs positioniert sich ein Fahrer des Fahrzeugs während des Rangiervorgangs außerhalb des Fahrzeugs. Der Fahrer wird mittels einer Detektionseinrichtung des Fahrzeugs während des Rangiervorgangs erfasst. Der Rangiervorgang wird zumindest unterbrochen, wenn der Fahrer sich zumindest außerhalb eines Bildbereichs eines von der Detektionseinrichtung aufgenommenen Bilds befindet. Eine derartige Vorgehensweise gewährt maximale Sicherheit, da dann, wenn der Fahrer sich aus dem Erfassungsbereich der Detektionseinrichtung herausbewegt und somit von der Detektionseinrichtung nicht mehr erfasst und erkannt wird oder zwar erfasst, aber nicht in einem vorgesehenen Bildbereich ist, sofort der Rangiervorgang unterbrochen wird. Unabhängig davon welche sonstigen Bewegungen oder gar Handzeichen ein Fahrer machen würde, wird somit der Rangiervorgang sofort gestoppt, wenn der Fahrer durch die Detektionseinrichtung diesbezüglich nicht mehr korrekt detektiert wird. Das Unterbrechen des Rangiervorgangs ist daher nicht mehr abhängig davon, dass der Fahrer außerhalb des Fahrzeugs ein spezifisches Handzeichen, was das Stoppen des Rangiervorgangs charakterisieren soll, machen muss, und dieses auch noch von der Detektoreinrichtung detektiert werden muss.

Erfindungsgemäß wird zur Erkennung des Fahrers beim Rangiervorgang des Fahrzeugs im Bild der Detektionseinrichtung vor dem Starten des Rangiervorgangs der Fahrer zumindest abschnittweise auf seinem Weg von dem Fahrzeug weg zu seiner Zielposition erfasst. Dadurch wird erkannt und festegelegt, dass der Fahrer das Referenzobjekt für das Beurteilen des Verlassens des Bildbereichs beim nachfolgenden Rangiervorgang bildet. Durch ein derartiges so genanntes "Tracken" des Fahrers kann auch ohne eine Mustererkennung das Referenzobjekt bestimmt werden, welches es für ein mögliches Abbruchszenario des Rangiervorgangs durch die Detektionseinrichtung zu beobachten gilt.

Es kann jedoch auch vorgesehen sein, dass zusätzlich eine Mustererkennung durchgeführt wird. Vorzugsweise wird dieses Erfassen des sich vom Fahrzeug weg bewegenden Fahrers bereits mit dem Aussteigen des Fahrers aus dem Fahrzeug begonnen.

Vorzugsweise wird der Rangiervorgang zumindest unterbrochen, wenn der Fahrer weiter als ein vorgebbarer Abstand zum Fahrzeug sich befindet. Vorzugsweise wird zur Erkennung des Fahrers beim Rangiervorgang des Fahrzeugs im Bild der Detektionseinrichtung vor dem Start des Rangiervorgangs eine Mustererkennung des Fahrers durchgeführt. Dies ist dahingehend besonders vorteilhaft, da somit eine eindeutige Identifizierung derjenigen Person erfolgen kann, welche im Weiteren im Hinblick auf das autonome Durchführen des Rangiervorgangs zu beachten ist. Auch dann kann, wenn sich mehrere Personen im Fahrzeug befinden und dann beim Rangiervorgang außerhalb des Fahrzeugs sind, die zu beachtende Person eindeutig erkannt werden. Andererseits ist durch eine derartige Mustererkennung auch dann eine verbesserte Identifikation möglich, wenn nur der Fahrer außerhalb des Fahrzeugs sich befindet. Gerade dann, wenn der Umgebungsbereich des Fahrzeugs mit einem oder mehreren Objekten gegebenenfalls im Hinblick auf die Farbe relativ gleich mit Kleidungsfarben des Fahrers ist, kann eine eindeutige Erkennung der Person des Fahrers erfolgen, auch wenn dieser sich nicht bewegen sollte.

Vorzugsweise ist vorgesehen, dass die Mustererkennung beim Verlassen des Fahrzeugs gestartet wird, insbesondere automatisch gestartet wird. Auch dadurch ist gewährleistet, dass die richtige, zu beachtende Person als zu beachtendes Referenzobjekt erkannt wird. Durch das insbesondere automatische Starten dieses Vorgangs kann es auch nicht vergessen werden, so dass auch diesbezüglich hohen Sicherheitsaspekten Rechnung getragen wird.

Alternativ kann jedoch auch vorgesehen sein, dass die Mustererkennung vom Fahrer selbst gestartet wird. Dies kann gegebenenfalls insbesondere dann erfolgen, wenn sich der Fahrer in einer ganz bestimmten Position zum Fahrzeug positionieren möchte, um dann spezifisch erkannt werden zu können.

Vorzugsweise wird vorgesehen, dass sich der Fahrer selbst in einem aufgenommenen Bild als Muster deklariert und diese Deklaration abgespeichert wird, und das Muster beim Rangiervorgang zugrundegelegt wird. Bei einer derartigen Vorgehensweise wird somit ein Bild aufgenommen, auf dem auch der Fahrer sich befindet. Dem System wird somit dann mitgeteilt, welches Objekt in dem Bild, das beim Rangiervorgang und insbesondere im Hinblick auf das Abbruchszenario wesentlich zu beachtende Objekt, nämlich der Fahrer, zu beachten ist.

Vorzugsweise wird vorgesehen, dass die Umgebungsvermessung und/oder die Festlegung einer Endposition des Rangiervorgangs und/oder die Bestimmung einer Rangiertrajektorie vom Fahrzeug autonom durchgeführt wird. Das Fahrzeug bzw. die Fahrerassistenzeinrichtung kann dazu ein oder mehrere Sensoren aufweisen, die eine entsprechende Umgebungserfassung durchführen, wobei abhängig von Informationen mittels einer Steuereinheit die Auswertung dieser Informationen durchgeführt wird.

Vorzugsweise wird das Starten des Rangiervorgangs durch den Fahrer durchgeführt. Dies ist vorteilhaft, da somit der Fahrer individuell dann entscheiden kann, ob er entsprechend zum Fahrzeug positioniert ist und auch in dieser Hinsicht in keiner Gefahrenzone sich befindet.

Vorzugsweise wird vorgesehen, dass der Rangiervorgang, insbesondere eine Rangiertrajektorie, zumindest abschnittsweise abhängig von einem von dem Fahrer durchschrittenen und durch die Detektionseinrichtung erfassten Weg durchgeführt wird. Bei einer derartigen Vorgehensweise wird die Rangiertrajektorie zumindest abschnittsweise durch den Weg, den der Fahrer durchschreitet, gebildet. Das Fahrzeug folgt dem Fahrer dann auf dessen spezifischem Weg.

Vorzugsweise wird vorgesehen, dass als Rangiervorgang ein Parken des Fahrzeugs durchgeführt wird. Diesbezüglich kann ein Einparken und ein Ausparken erfolgen. Mit einem Rangiervorgang ist jedoch auch ein Bewegungsszenario des Fahrzeugs umfasst, bei dem beispielsweise eine spezifische Engstelle in der Fahrbahn oder dergleichen durchfahren wird, ohne dass das Fahrzeug dann abschließend abgestellt und geparkt werden würde.

Die Erfindung betrifft auch eine Fahrerassistenzeinrichtung, insbesondere eine Parkassistenzeinrichtung, welche zum Durchführen eines erfindungsgemäßen Verfahrens oder einer vorteilhaften Ausgestaltung davon ausgebildet ist. Die Fahrerassistenzeinrichtung umfasst dazu die zumindest eine Detektionseinrichtung und/oder weitere Sensoren. Darüber hinaus umfasst die Fahrerassistenzeinrichtung auch zumindest eine Steuer- und Auswerteeinheit, welche einerseits zum Auswerten der Informationen der Detektionseinrichtung und/oder der Sensoren ausgebildet ist, andererseits auch zum Durchführen von Funktionen der Fahrerassistenzeinrichtung ausgebildet ist.

Des Weiteren betrifft die Erfindung auch ein Fahrzeug mit einer erfindungsgemäßen Fahrerassistenzeinrichtung oder einer vorteilhaften Ausgestaltung davon.

Insbesondere sind vorteilhafte Ausführungen des erfindungsgemäßen Verfahrens als vorteilhafte Ausführungen der erfindungsgemäßen Fahrerassistenzeinrichtung anzusehen. Die dabei durchgeführten Abläufe werden durch die gegenständlichen Mittel, insbesondere die Detektionseinrichtung und/oder die Sensoren und/oder die Steuer- und Auswerteeinheit, der Fahrerassistenzeinrichtung durchgeführt.

Die Aktivierung des Rangiervorgangs durch den Fahrer erfolgt beispielsweise über einen elektronischen Schlüssel oder ein Mobiltelefon oder dergleichen.

Vorzugsweise ist als Detektionseinrichtung eine Kamera verwendet, welche insbesondere im für den Menschen sichtbaren Spektralbereich sensitiv ist. Es kann auch ein Multikamerasystem, welches am oder im Fahrzeug verbaut ist, verwendet werden, welches gegebenenfalls ohnehin vorhanden ist und ansonsten zur Umgebungsüberwachung des Fahrzeugs vorgesehen ist. Eine derartige Kamera bzw. ein derartiges Multikamerasystem wird dann mit zumindest einer weiteren Funktionalität ausgebildet, so dass die Multifunktionalität dieser Kamera bzw. dieses Kamerasystems erhöht ist.

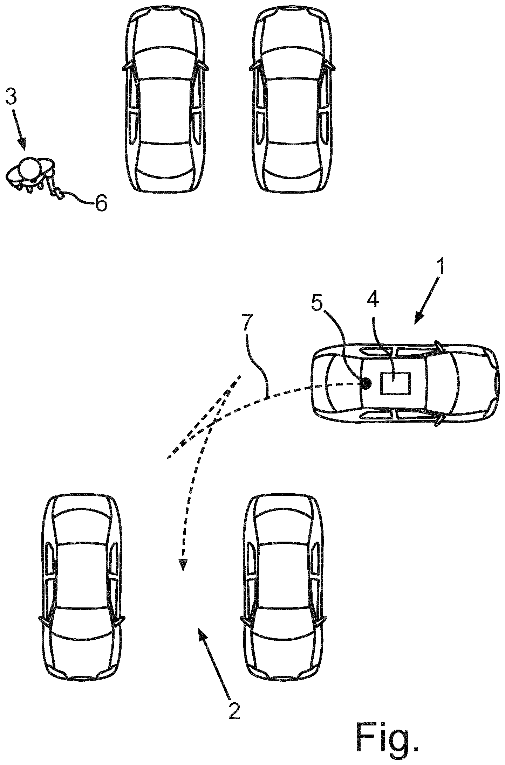

Ein Ausführungsbeispiel der Erfindung wird nachfolgend anhand einer schematischen Zeichnung erläutert. Die einzige Figur zeigt eine Draufsicht auf eine spezifische Verkehrssituation, bei der ein Fahrzeug 1 in eine Parklücke 2 eingeparkt werden soll. Wie dabei gemäß der Darstellung in der Figur zu erkennen ist, befindet sich ein Fahrer 3 bereits außerhalb des Fahrzeugs 1. Das Fahrzeug 1 umfasst eine Fahrerassistenzeinrichtung 4, die eine Mehrzahl von Sensoren sowie eine Steuer- und Auswerteeinheit aufweist. Darüber hinaus umfasst die Fahrerassistenzeinrichtung 4 auch zumindest eine Detektionseinrichtung 5 in Form zumindest einer Kamera, wobei diese Detektionseinrichtung 5 bei dem hier rückwärts durchzuführenden Einparkvorgang, der einen Rangiervorgang darstellt, eine Rückfahrkamera ist, jedoch auch eine andere örtlich im oder am Fahrzeug 1 angeordnete Kamera sein kann.

Bei dieser Ausgestaltung wird zunächst nach dem Verlassen des Fahrzeugs 1 durch den Fahrer 3 eine Mustererkennung durchgeführt, wobei dann der Fahrer 3 entsprechend als Referenzobjekt identifiziert wird. Mittels dieser Mustererkennung wird definiert, dass der Fahrer 3 im nachfolgend durchzuführenden autonomen Einparkvorgang das von der Detektionseinrichtung 5 zu beachtende Objekt ist.

Die Mustererkennung kann automatisch erfolgen oder durch den Fahrer 3 gestartet durchgeführt werden.

Ist die Mustererkennung abgeschlossen und soll der Einparkvorgang gestartet werden, so erfolgt dies im Ausführungsbeispiel durch ein aktives Starten durch den Fahrer 3. Dazu kann dieser beispielsweise eine tragbare Sende- und Empfangseinheit 6 aufweisen, welche ein Mobiltelefon oder ein elektronischer Schlüssel sein kann.

Neben einer Mustererkennung kann zusätzlich oder anstatt dazu ein Tracken des Fahrers 3 nach dem Verlassen des Fahrzeugs 1 durch die Detektionseinrichtung 5 vor dem Starten des Rangiervorgangs erfolgen, so dass auch dadurch das Referenzobjekt erkannt und festgelegt wird, welches sich dann im nachfolgenden Rangiervorgang im Hinblick auf das Vorhandensein zumindest innerhalb eines Bildbereichs eines von der Detektionseinrichtung erfassbaren Bilds befinden muss.

Wesentlich ist, dass während des Rangiervorgangs der Fahrer 3 sich stets im Erfassungsbereich der Detektionseinrichtung 5 befindet. Ist dies nicht mehr gewährleistet, weil beispielsweise sich das Fahrzeug 1 entsprechend bewegt und/oder der Fahrer 3 sich aktiv aus diesem Erfassungsbereich herausbewegt, so wird der Einparkvorgang sofort unterbrochen und das Fahrzeug zum Stillstand gebracht.

Es kann in diesem Zusammenhang vorgesehen sein, dass der Einparkvorgang dann vollständig abgebrochen wird, oder dass er erst nach einer spezifisch vorgebbaren Verweildauer, die beispielsweise kleiner 20 Sekunden sein kann, wieder fortgesetzt wird, wenn der Fahrer 3 innerhalb dieser Verweildauer wieder in den Erfassungsbereich der Detektionseinrichtung 5 tritt.

Insbesondere ist vorgesehen, dass dem Fahrer 3 mitgeteilt wird, wenn er außerhalb des Erfassungsbereichs sich befindet, wobei er dies danach unverzüglich bereits selbst merkt, indem er erkennt, dass das Fahrzeug 1 zum Stillstand gekommen ist.

Durch diese Funktionalität im Hinblick auf das Unterbrechen des Einparkvorgangs kann höchstmögliche Sicherheit gewährleistet werden. Dies einerseits dahingehend, dass der Fahrer 3 das Fahrzeug 1 während des gesamten autonomen Einparkvorgangs im Blickfeld hat, und andererseits auch dann, wenn er selbst nicht merkt, dass er aus dem Erfassungsbereich der Detektionseinrichtung 5 herausfällt, quasi das Fahrzeug 1 sofort anhält.

Im Hinblick auf das Einparken in die Parklücke 2 wird vorzugsweise durch die Fahrerassistenzeinrichtung 4 selbständig ermittelt, welches die geeignetste Rangiertrajektorie bzw. Einparktrajektorie ist.

Es kann auch vorgesehen sein, dass ein Unterbrechen des Einparkvorgangs des Fahrzeugs 1 auch dann erfolgt, wenn der Fahrer 3 sich außerhalb eines spezifischen Bildbereichs des aufgenommenen Bilds befindet, andererseits jedoch noch in dem Erfassungsbereich der Detektionseinrichtung 5 ist.

Ebenso kann vorgesehen sein, dass der Fahrer 3 durch sein spezifisches Fortbewegen bzw. Gehen zumindest abschnittsweise eine Trajektorie vorgibt, die das Fahrzeug 1 zum Einparken in die Parklücke 2 durchfahren soll.

Zusätzlich kann für das Unterbrechen des Rangiervorgangs auch der Abstand des Fahrers 3 zum Fahrzeug 1 berücksichtigt werden und beispielsweise ein Unterbrechen erfolgen, wenn der Abstand größer einem Schwellwert ist. Der Schwellwert kann vorzugsweise variabel verändert werden, beispielsweise durch den Fahrer 3 selbst festgelegt werden oder von der Assistenzeinrichtung abhängig von Kriterien, beispielsweise von Umgebungsbedingungen vorgegeben werden.

## Patentansprüche

1. Verfahren zum autonomen Rangieren eines Fahrzeugs (1), bei welchem sich ein Fahrer (3) des Fahrzeugs (1) während des Rangiervorgangs außerhalb des Fahrzeugs (1) positioniert, und der Fahrer (3) mittels einer Detektionseinrichtung (5) des Fahrzeugs (1) während des Rangiervorgangs erfasst wird, wobei der Rangiervorgang zumindest unterbrochen wird, wenn der Fahrer (3) sich zumindest außerhalb eines Bildbereichs eines von der Detektionseinrichtung (5) aufgenommenen Bilds befindet.
**dadurch gekennzeichnet, dass**
zur Erkennung des Fahrers (3) beim Rangiervorgang des Fahrzeugs (1) im Bild der Detektionseinrichtung (5) vor dem Starten des Rangiervorgangs der Fahrer zumindest abschnittweise auf seinem Weg von dem Fahrzeug (1) weg zu seiner Zielposition erfasst wird und dadurch erkannt und festgelegt wird, dass der Fahrer (3) das Referenzobjekt für das Beurteilen des Verlassens des Bildbereichs beim Rangiervorgang bildet.

2. Verfahren nach Anspruch 1,
**dadurch gekennzeichnet, dass**
der Rangiervorgang zumindest unterbrochen wird, wenn sich der Fahrer (3) weiter weg als ein vorgebbarer Abstand zum Fahrzeug (1) befindet.

3. Verfahren nach Anspruch 1 oder 2,
**dadurch gekennzeichnet, dass**
zur Erkennung des Fahrers (3) beim Rangiervorgang des Fahrzeugs (1) im Bild der Detektionseinrichtung (5) vor dem Starten des Rangiervorgangs eine Mustererkennung des Fahrers (3) durchgeführt wird.

4. Verfahren nach Anspruch 3,
**dadurch gekennzeichnet, dass**
die Mustererkennung beim Verlassen des Fahrers (3) des Fahrzeugs (1) gestartet wird, insbesondere automatisch gestartet wird.

5. Verfahren nach Anspruch 3,
**dadurch gekennzeichnet, dass**
die Mustererkennung vom Fahrer (3) selbst gestartet wird.

6. Verfahren nach Anspruch 5,
**dadurch gekennzeichnet, dass**
sich der Fahrer (3) selbst in einem aufgenommenen Bild als Muster deklariert und diese Deklaration abgespeichert wird und das Muster beim Rangiervorgang zu Grunde gelegt wird.

7. Verfahren nach Anspruch 1,
**dadurch gekennzeichnet, dass**
das Erfassen mit dem Verlassen des Fahrzeugs (1) beginnt.

8. Verfahren nach einem der vorhergehenden Ansprüche,
**dadurch gekennzeichnet, dass**
die Umgebungsvermessung und/oder die Festlegung einer Endposition des Rangiervorgangs und/oder die Bestimmung einer Rangiertrajektorie (7) vom Fahrzeug (1) autonom durchgeführt wird.

9. Verfahren nach einem der vorhergehenden Ansprüche,
**dadurch gekennzeichnet, dass**
das Starten des Rangiervorgangs durch den Fahrer erfolgt.

10. Verfahren nach einem der vorhergehenden Ansprüche,
**dadurch gekennzeichnet, dass**
der Rangiervorgang, insbesondere eine Rangiertrajektorie (7), zumindest abschnittweise abhängig von einem von dem Fahrer (3) durchschrittenen und durch die Detektionseinrichtung (5) erfassten Weg durchgeführt wird.

11. Verfahren nach einem der vorhergehenden Ansprüche,
**dadurch gekennzeichnet, dass**
als Rangiervorgang ein Parken des Fahrzeugs (1) durchgeführt wird.

12. Fahrerassistenzeinrichtung (4), insbesondere Parkassistenzeinrichtung, welche zum Durchführen eines Verfahrens nach einem der vorhergehenden Ansprüche ausgebildet ist.

## Claims

1. Method for autonomously manoeuvring a vehicle (1), in which a driver (3) of the vehicle (1) is positioned outside the vehicle (1) during the manoeuvring operation and the driver (3) is detected during the manoeuvring operation by means of a detection device (5) of the vehicle (1), the manoeuvring operation being at least interrupted if the driver (3) is at least outside an image area of an image recorded by the detection device (5),
**characterized in that**
in order to identify the driver (3) during the manoeuvring operation of the vehicle (1) in the image from the detection device (5), before the manoeuvring operation is started, the driver is detected, at least in sections, on his way away from the vehicle (1) to his target position, and it is thereby identified and determined that the driver (3) forms the reference object for assessing when the image area is left during the manoeuvring operation.

2. Method according to Claim 1,
**characterized in that**
the manoeuvring operation is at least interrupted if the driver (3) is further away than a predefinable distance from the vehicle (1).

3. Method according to Claim 1 or 2,
**characterized in that**
in order to identify the driver (3) during the manoeuvring operation of the vehicle (1) in the image from the detection device (5), before the manoeuvring operation is started, pattern recognition of the driver (3) is carried out.

4. Method according to Claim 3,
**characterized in that**
the pattern recognition is started, in particular is started automatically, when the driver (3) of the vehicle (1) leaves it.

5. Method according to Claim 3,
**characterized in that**
the pattern recognition is started by the driver (3) himself.

6. Method according to Claim 5,
**characterized in that**
the driver (3) declares himself as a pattern in a recorded image and this declaration is stored and the pattern is taken as a basis during the manoeuvring operation.

7. Method according to Claim 1,
**characterized in that**
the detection begins when the vehicle (1) is left.

8. Method according to one of the preceding claims,
**characterized in that**
the environment measurement and/or the stipulation of an end position of the manoeuvring operation and/or the determination of a manoeuvring trajectory (7) is/are autonomously carried out by the vehicle (1).

9. Method according to one of the preceding claims, **characterized in that**
the manoeuvring operation is started by the driver.

10. Method according to one of the preceding claims,
**characterized in that**
the manoeuvring operation, in particular a manoeuvring trajectory (7), is carried out, at least in sections, on the basis of a path through which the driver (3) has passed and which has been detected by the detection device (5).

11. Method according to one of the preceding claims,
**characterized in that**
the vehicle (1) is parked as the manoeuvring operation.

12. Driver assistance device (4), in particular parking assistance device, which is designed to carry out a method according to one of the preceding claims.

## Revendications

1. Procédé de stationnement automatique d'un véhicule (1), dans lequel un conducteur (3) du véhicule (1), pendant la manoeuvre, se positionne à l'extérieur du véhicule (1), et le conducteur (3) est détecté au moyen d'un dispositif de détection (5) du véhicule (1) pendant la manoeuvre, dans lequel la manoeuvre est au moins interrompue lorsque le conducteur (3) se trouve au moins à l'extérieur d'une zone d'image d'une image acquise par le dispositif de détection (5),
**caractérisé en ce que**, pour détecter le conducteur (3) lors de la manoeuvre du véhicule (1) dans l'image du dispositif de détection (5) avant le démarrage de la manoeuvre, le conducteur est détecté au moins par endroits sur son trajet depuis le véhicule (1) jusqu'à sa position cible et **en ce qu'**il est ainsi détecté et établi que le conducteur (3) forme l'objet de référence pour le jugement du fait qu'il quitte la zone d'image lors de la manoeuvre.

2. Procédé selon la revendication 1,
**caractérisé en ce que** la manoeuvre est au moins interrompue lorsque le conducteur (3) est plus éloigné qu'une certaine distance pouvant être prédéterminée du véhicule (1).

3. Procédé selon la revendication 1 ou 2,
**caractérisé en ce que**, pour détecter le conducteur (3) lors de la manoeuvre du véhicule (1) dans l'image du dispositif de détection (5) avant le démarrage de la manoeuvre, une reconnaissance de forme du conducteur (3) est effectuée.

4. Procédé selon la revendication 3,
**caractérisé en ce que** la reconnaissance de forme est démarrée lorsque le conducteur (3) quitte le véhicule (1), et est notamment démarrée automatiquement.

5. Procédé selon la revendication 3,
**caractérisé en ce que** la reconnaissance de forme est démarrée par le conducteur (3) lui-même.

6. Procédé selon la revendication 5,
**caractérisé en ce que** le conducteur (3) se déclare lui-même être dans une image acquise en tant que forme, **en ce que** ladite déclaration est enregistrée et **en ce que** la forme est utilisée comme base lors de la manoeuvre.

7. Procédé selon la revendication 1,
**caractérisé en ce que** la détection commence lorsqu'on quitte le véhicule (1).

8. Procédé selon l'une quelconque des revendications précédentes,
**caractérisé en ce que** la mesure de l'environnement et/ou l'établissement d'une position finale de la manoeuvre et/ou la détermination d'une trajectoire de stationnement (7) est effectué de manière autonome par le véhicule (1).

9. Procédé selon l'une quelconque des revendications précédentes,
**caractérisé en ce que** le démarrage de la manoeuvre est effectué par le conducteur.

10. Procédé selon l'une quelconque des revendications précédentes,
**caractérisé en ce que** la manoeuvre, notamment le parcours d'une trajectoire de stationnement (7), est effectuée au moins par endroits en fonction d'un trajet parcouru par le conducteur (3) et détecté par le dispositif de détection (5).

11. Procédé selon l'une quelconque des revendications précédentes,
**caractérisé en ce qu'**une manoeuvre de stationnement du véhicule (1) est effectuée en tant que manoeuvre.

12. Dispositif d'aide à la conduite (4), notamment dispositif d'aide au stationnement, qui est réalisé de manière à mettre en oeuvre un procédé selon l'une quelconque des revendications précédentes.
